# EUROPEAN PATENT SPECIFICATION

(11) **EP 3 846 106 B1**
(45) Date of publication and mention of the grant of the patent: **22.11.2023**
(21) Application number: 20815050.8
(22) Date of filing: 18.02.2020
(51) Int. Cl.: G06Q 20/34, G06Q 20/32, G07F 7/08, G06Q 20/20, G06Q 20/40

(54) **PAYMENT INFORMATION PROCESSING METHOD, APPARATUS AND DEVICE, AND COMPUTER-READABLE STORAGE MEDIUM**
VERFAHREN, EINRICHTUNG UND VORRICHTUNG ZUR VERARBEITUNG VON ZAHLUNGSINFORMATIONEN UND COMPUTERLESBARES SPEICHERMEDIUM
PROCÉDÉ, APPAREIL ET DISPOSITIF DE TRAITEMENT D'INFORMATIONS DE PAIEMENT ET SUPPORT DE STOCKAGE LISIBLE PAR ORDINATEUR

(30) Priority: 31.05.2019 CN 201910468750
(43) Date of publication of application: 07.07.2021
(73) Proprietor: China Unionpay Co., Ltd, Shanghai 200135 (CN)
(72) Inventor: HE, Shuo, Shanghai 200135 (CN); PENG, Cheng, Shanghai 200135 (CN); GUO, Wei, Shanghai 200135 (CN); YU, Wenhai, Shanghai 200135 (CN); ZHANG, Limin, Shanghai 200135 (CN); QIAN, Jin, Shanghai 200135 (CN)
(74) Representative: Valea AB
(86) International application number: PCT/CN2020/075714
(87) International publication number: WO 2020/238290

(56) References cited:
- CN-A- 101 290 669
- CN-A- 102 289 752
- CN-A- 102 811 276
- CN-A- 104 850 989
- CN-A- 110 175 839
- JP-A- 2008 252 183
- US-A1- 2011 187 505
- US-A1- 2016 094 698
- US-A1- 2018 096 329
- Anonymous: "Kalman filter - Wikipedia", , 15 May 2019 (2019-05-15), XP055969812, Retrieved from the Internet: URL:https://en.wikipedia.org/w/index.php?t itle=Kalman_filter&oldid=897230289 [retrieved on 2022-10-11]

## Description

### TECHNICAL FIELD

The present application relates to the technical field of information processing, in particular to a payment information processing method, apparatus, device and computer readable storage medium.

### BACKGROUND

When a merchant uses a mobile acquiring device to acquire payment from a payment card with a contactless chip held by a cardholder to complete a small payment transaction, the mobile acquiring device usually obtains payment card information stored in the contactless ship based on an acquiring request, then directly sends the payment card information to an acquirer and performs the subsequent transaction process.

When the payment card with the contactless chip is used for the small payment transaction, there is generally no need for the cardholder to enter identity authentication information or perform transaction confirmation. Therefore, the payment card may be fraudulently or falsely used, affecting account security of the payment card of the cardholder.

US2018/0096329A1 relates to fraud detection in portable payment readers. According to this disclosure, a payment card reader and a POS terminal may communicate over a wireless connection. When a request for establishing a network connection with the payment card reader is received from the POS terminal, the server may determine whether the payment card reader is associated with the POS terminal or a payment application thereon. If the payment card reader is not associated with the POS terminal or the payment application thereon, the server determines the probability of the request being fraudulent.

US20110187505A1 discloses systems, apparatuses and methods for using a mobile device with an accelerometer to gain access into a secured or restricted area. A first device and a second device interact by making physical contact with each other thereby generating interaction data that is representative of the physical interaction between the first and second devices. The first and second devices may be mobile phones. The second device may be a point of sale terminal, access point device, or any other stationary device positioned at a line, door, gate, or entrance. A server computer determines, based on interaction data, that the first device and the second device made physical contact. After determining that the first device and the second device made contact, communication may be initiated between the devices.

### SUMMARY

The invention is set out in the appended set of claims.

### BRIEF DESCRIPTION OF THE DRAWINGS

The features, advantages, and technical effects of exemplary embodiments of the present application will be described below with reference to the accompanying drawings.
Fig. 1 is a system architecture diagram of a contactless payment system according to the present application;
Fig. 2 is a schematic flowchart of a payment information processing method provided by the present application;
Fig. 3 is a schematic flowchart of a Kalman filter process provided by an embodiment of the present application;
Fig. 4 is a schematic flowchart of a payment information processing method provided by the present application;
Fig. 5 is a schematic flowchart of a payment information processing method provided by the present application;
Fig. 6 is a schematic diagram of a transaction process provided by the present application;
Fig. 7 is a schematic structural diagram of a payment information processing apparatus provided by the present application;
Fig. 8 is a schematic structural diagram of a payment information processing apparatus provided by the present application;
Fig. 9 is a schematic diagram of a hardware structure of a payment information processing device according to the present application.

### DETAILED DESCRIPTION

Implementations of the present application will be described in further detail below in conjunction with the accompanying drawings and embodiments. The detailed description and drawings of the following embodiments are used to exemplarily illustrate the principle of the application, but cannot be used to limit the scope of the application, that is, the application is not limited to the described embodiments.

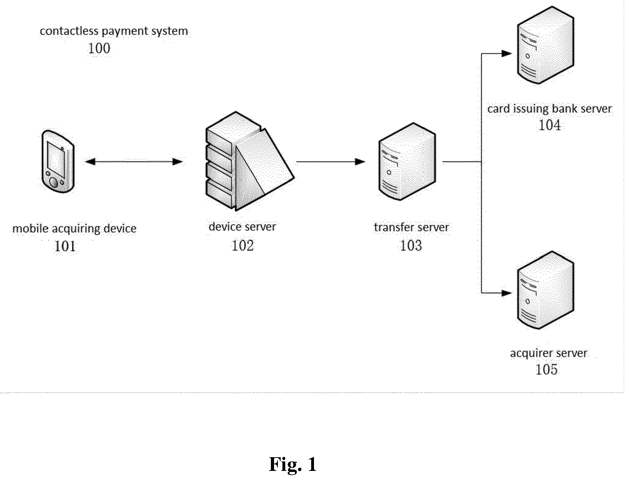

Fig. 1 shows a system architecture diagram of a contactless payment system according to the present application. The contactless payment system 100 includes a mobile acquiring device 101, a device server 102, a transfer server 103, a card issuing bank server 104, and an acquirer server 105.

The mobile acquiring device 101 may be a Point of sales (POS) device or a mobile terminal with a POS function.

The mobile acquiring device 101 includes a POS function module and an identity verification module. The POS function module supports at least a flash payment function via a payment card and a flash payment function via a third-party payment software. The POS function module is used by a merchant to send an acquiring request, and in response to the acquiring request being sent, obtains information about the payment card with a contactless chip held by a cardholder or payment information of the third-party payment software in the mobile terminal used by a payer. The identity verification module supports at least one of password verification, face verification, and fingerprint verification, and is used to obtain verification information entered by the merchant. The device server 102 includes a business function server and an identity verification server. The business function server is used for processing of a payment card transaction or a third-party payment software transaction. The identity verification server is used for processing of the identity verification of the merchant. The device server 102 communicates with the card issuing bank server 104 and the acquirer server 105 through the transfer server 103 to transmit transaction information. After completion of the transaction, the card issuing bank server 104 may send payment related information to the cardholder's mobile terminal, and the acquirer server 105 may send payment collection related information to the mobile acquiring device 101.

In order to solve the problem in the prior art that the payment card with the contactless chip or the third-party payment software in the mobile terminal may be fraudulently or falsely used on the mobile acquiring device 101, the mobile acquiring device 101 in the embodiment of the present application may be additionally provided with a risk assessment module for collecting relevant data used to assess transaction risk, and the device server 102 may be additionally provided with a risk prevention and control server for determining a payment information processing result related to the transaction risk based on the relevant data.

A payment information processing method provided by the present application will be firstly introduced below. The payment information processing method may be applied to the device server 102 shown in Fig. 1.

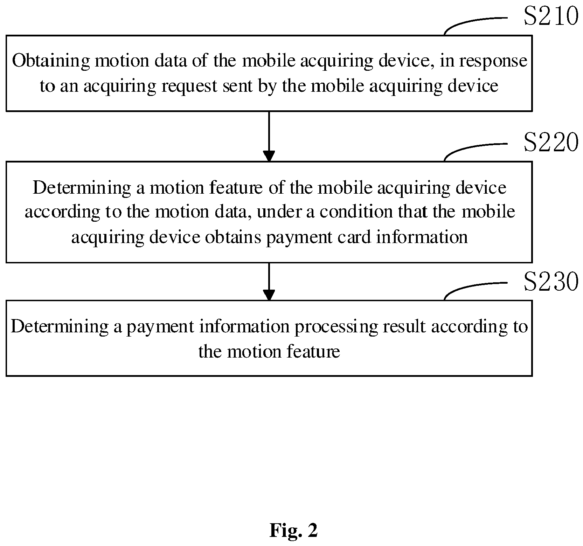

Fig. 2 shows a schematic flowchart of a payment information processing method provided by the present application. As shown in Fig. 2, the payment information processing method includes:
S210: obtaining motion data of the mobile acquiring device, in response to an acquiring request sent by the mobile acquiring device;
S220: determining a motion feature of the mobile acquiring device according to the motion data, under a condition that the mobile acquiring device obtains payment card information;
S230: determining a payment information processing result according to the motion feature.

In the present application, after the mobile acquiring device sends the acquiring request, the motion data of the mobile acquiring device can be obtained, and under a condition that the mobile acquiring device obtains the payment card information of the payment card, the motion feature of the mobile acquiring device may be determined by use of the motion data, so that the payment information processing result related to the transaction risk can be determined based on the motion feature so as to provide a risk judgment basis for the transaction. Thus when the merchant uses the mobile acquiring device to initiate a transaction and obtain a transaction object, security of a payment card account of a cardholder corresponding to the transaction object can be improved, and a probability of false or fraudulent use of the payment card can be reduced.

The payment information processing method of the embodiment of the present application may be applied to various transaction cards with a contactless chip or a contact chip, such as a bank card, a bus card or a shopping card, etc.; and may also be applied to a third party payment software in a mobile terminal.

In step S210 of the present application, when the merchant uses the mobile acquiring device to have a transaction with the cardholder, the merchant firstly needs to use the mobile acquiring device to send the acquiring request; after sending the acquiring request, the mobile acquiring device sends the acquiring request and/or an acquiring request signal to the device server; and the device server responds to the acquiring request sent by the mobile acquiring device by responding to the acquiring request and/or the acquiring request signal, and obtains the motion data of the mobile acquiring device.

The obtained motion data of the mobile acquiring device is data collected by the mobile acquiring device between a first moment and a second moment, where the first moment is a moment when the mobile acquiring device sends the acquiring request and the second moment is a moment when the mobile acquiring device obtains the payment card information. It is not only possible to prevent circumvention of the transaction detection based on the motion data detection, but also possible to reduce an amount of data processing, improve efficiency of the data processing and reduce resource occupation of the device server since the data is collected only from the moment when the acquiring request is sent to the moment when the payment card information is obtained, i.e. during a period when the payment card is actually swiped.

In step S220 of some embodiments of the present application, the payment card information may be information stored in the contact chip or the contactless chip of the payment card. In step S220 in some other embodiments of the present application, the payment card information may also be information stored in the mobile terminal.

The payment card information may include at least identity information of the cardholder of the payment card and account information of the payment card. The payment card information may be used by a card issuing bank to verify the identity of the cardholder and the transaction account for the transaction.

After the mobile acquiring device initiates the acquiring request, the information in the chip of the payment card may be distinguished from the information in the mobile terminal based on data fields of the information read by the mobile acquiring device using Near Field Communication (NFC) technology.

In the embodiment of the present application, the waiting time for the mobile acquiring device to obtain the payment card information in response to sending the acquiring request may also be limited, so that under a condition that the response to the acquiring request reaches a predetermined time period and the mobile acquiring device has not obtained the payment card information, the device server can reobtain the motion data of the mobile acquiring device in response to an acquiring request resent by the mobile acquiring device. That is, under a condition that the waiting time for the mobile acquiring device to obtain the payment card information reaches the predetermined time period and the mobile acquiring device has not yet obtained the payment card information, the transaction may be terminated, and thus the mobile acquiring device may need to resend the acquiring request. In this case, the device server may reobtain the motion data of the mobile acquiring device in response to the acquiring request resent by the mobile acquiring device.

In the embodiment of the present application, the predetermined time period may be set to be any time period in a range of 5s to 8s, such as 5s, 6s, or 8s, and may also be set to be other time periods as required.

Since the predetermined time period corresponding to the waiting time for the mobile acquiring device to obtain the payment card information is set in the embodiment of the present application, a possibility that a merchant fraudulently using the payment card continuously uses the mobile acquiring device to fraudulently use the payment card can be reduced in the embodiment of the present application.

In some embodiments of the present application, the motion data may include action sensor signals at multiple moments, so that the action sensor signals at the multiple moments may be used to determine the motion feature of the mobile acquiring device. In some other embodiments of the present application, the motion data may also include a distance sensor signal, so that distance sensor signals at multiple moments can be used to determine distance and position changes of the mobile acquiring device relative to at least one reference object and determine the motion feature of the mobile acquiring device.

When the motion data may include action sensor signals at multiple moments, in step S220 of the embodiment of the present application, the specific method for determining the motion feature of the mobile acquiring device according to the motion data may include:
S221: performing Kalman filtering on the action sensor signals at the multiple moments to obtain Kalman filtered data at the multiple moments;
S222: determining the motion feature of the mobile acquiring device according to the Kalman filtered data at the multiple moments.

When the motion data may include action sensor signals at multiple moments, the action sensor signals may include at least one of an accelerometer signal, a gyroscope signal, and a magnetometer signal. For example, when the action sensor signal includes an accelerometer signal, the accelerometer signal may be used to determine a motion velocity changing feature of the mobile acquiring device as the motion feature of the mobile acquiring device. For another example, when the action sensor signal includes a gyroscope signal, the gyroscope signal can be used to determine a motion attitude feature of the mobile acquiring device as the motion feature of the mobile acquiring device. For another example, when the action sensor signals include an accelerometer signal and a gyroscope signal, the accelerometer signal and the gyroscope signal can be used to determine a motion velocity feature, a motion position feature, and a motion attitude feature of the mobile acquiring device as the motion feature of the mobile acquiring device.

In the embodiment of the present application, the Kalman filtered data may include at least one of a motion angular velocity coordinate, a motion acceleration coordinate, a motion position coordinate, and a motion attitude angle coordinate.

Hereinafter, taking the case where the motion data may include action sensor signals at multiple moments and the action sensor signals include the accelerometer signal and the gyroscope signal as an example, step S221 of the embodiment of the present application will be described in detail.

In some embodiments of the present application, before step S221, after the accelerometer signal and the gyroscope signal are obtained, the accelerometer signal and the gyroscope signal can be formatted and unit converted, so that the accelerometer signal and the gyroscope signal obtained from different mobile acquiring devices can be converted into a unified data format to facilitate subsequent data processing.

In some embodiments of the present application, before step S221, the converted accelerometer signal and gyroscope signal may also be preprocessed to remove signal noise. Specifically, complementary filtering can be performed on the converted accelerometer signal and gyroscope signal. Because the accelerometer signal is unavailable at high frequencies, and the gyroscope signal is not good at low frequencies, it is necessary to filter out high-frequency components of the accelerometer signal (i.e., to perform low-pass filtering on the accelerometer signal) and filter out low-frequency components of the gyroscope signal (i.e., to perform highpass filtering on the gyroscope signal).

In step S221 of the embodiment of the present application, the action sensor signals at the multiple moments may be separately input into the Kalman filter for filtering, to obtain Kalman filtered data at the multiple moments. The Kalman filter may include a filter calculation loop and a gain calculation loop.

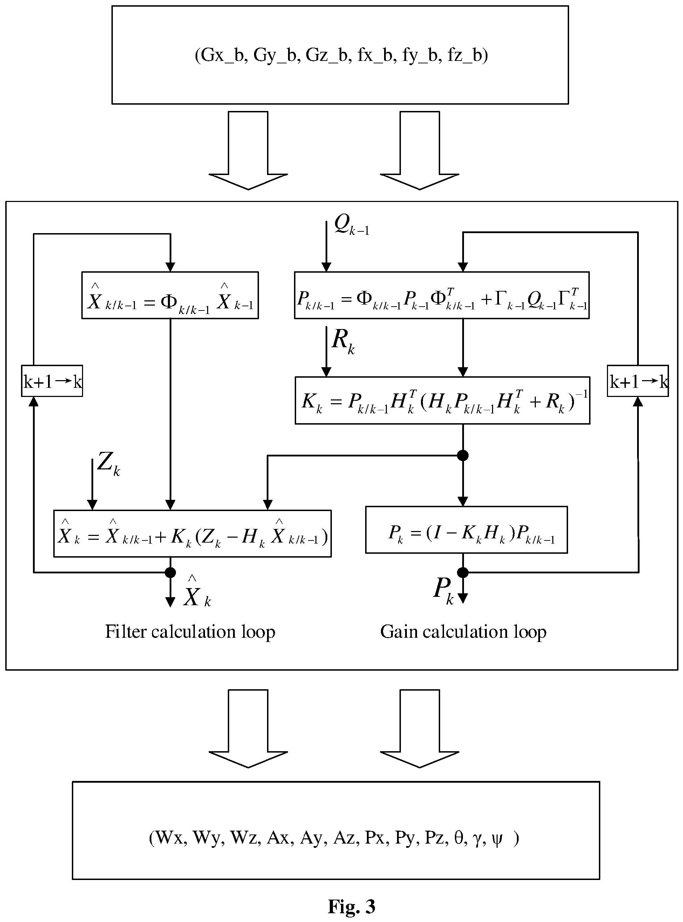

Fig. 3 shows a schematic flowchart of a Kalman filter process provided by an embodiment of the present application. As shown in Fig. 3, the gyroscope signal (Gx_b, Gy_b, Gz_b) and the accelerometer signal (fx_b, fy_b, fz_b) at a moment can be combined into a data signal (Gx_b, Gy_b, Gz_b, fx_b, fy_b, fz_b), and the data signal (Gx_b, Gy_b, Gz_b, fx_b, fy_b, fz_b) can be input into the Kalman filter for the Kalman filtering processing, so that the accelerometer signal and the gyroscope signal can be deeply integrated based on the Kalman filtering to obtain the Kalman filtered data (Wx, Wy, Wz, Ax, Ay, Az, Px, Py, Pz, θ, γ, ψ) at the moment.

In the embodiment of the present application, the accelerometer signal and the gyroscope signal can be complemented by the Kalman filtering, which can avoid a problem of having a large motion noise and error when only the accelerometer is used for measurement or having an error drifting with time when only the gyroscope is used for measurement. Therefore, according to the embodiment of the present application, the accelerometer signal and the gyroscope signal can be effectively combined, thereby improving accuracy of motion monitoring of the mobile acquiring device.

The above-mentioned Kalman filtered data includes motion angular velocity coordinates (Wx, Wy, Wz), motion acceleration coordinates (Ax, Ay, Az), motion position coordinates (Px, Py, Pz) and motion attitude angle coordinates (θ, γ, ψ), and may be used to recognize normal and abnormal acquiring actions so as to evaluate the risk of fraudulent or false use.

In step S222 of the embodiment of the present application, the specific method for determining the motion feature of the mobile acquiring device according to the Kalman filtered data at the multiple moments may include:
calculating motion feature vectors at the multiple moments according to the Kalman filtered data at the multiple moments;
arranging the motion feature vectors at the multiple moments in chronological order to form the motion feature of the mobile acquiring device.

The motion feature vector may include at least one of a motion angular velocity component, a motion acceleration component, a motion position component, and a motion attitude angle component.

Continue to take the aforementioned case where the motion data may include action sensor signals at multiple moments and the action sensor signals include the accelerometer signals and the gyroscope signal as an example.

The Kalman filtered data at a moment obtained by the Kalman filter includes motion angular velocity coordinates (Wx, Wy, Wz), motion acceleration coordinates (Ax, Ay, Az), motion position coordinates (Px, Py, Pz) and motion attitude angle coordinates (θ, γ, ψ). The motion angular velocity, the motion acceleration, the motion position and the motion attitude angle at the moment can be calculated, and the motion angular velocity, the motion acceleration, the motion position and the motion attitude angle can be taken as individual components of the motion feature vector at the moment. Therefore, the motion feature vector at the moment may include a motion angular velocity component, a motion acceleration component, a motion position component, and a motion attitude angle component. Then, the motion feature vectors at the multiple moments may be arranged in chronological order into a feature vector matrix. The feature vector matrix may be used as the motion feature of the mobile acquiring device to reflect a motion trajectory and a motion state of the mobile acquiring device. Therefore it is possible to realize the monitoring of the motion trajectory and the motion state, classify and recognize normal acquiring actions and abnormal acquiring actions, and thus evaluate the risk of fraudulent or false use.

In some embodiments of the present application, similarity between the motion feature of the mobile acquiring device and at least one preset motion feature can be calculated, and then the payment information processing result can be determined according to the similarity.

Before using at least one preset motion feature to determine the payment information processing result, the payment information processing method of the embodiment of the present application may further include: performing a feature analysis based on historical motion data of at least one mobile acquiring device to obtain at least one preset motion feature .

Specifically, based on given historical motion data of at least one mobile acquiring device, feature analysis and data modeling may be performed on the historical motion data of at least one mobile acquiring device to obtain at least one preset motion feature.

In order to enhance recognition accuracy, recognition verification on the motion state may be performed. Based on similarity detection results in actual use, the motion data of the mobile acquiring device detected in actual use may be analyzed, judged and checked for robustness again to determine false positive and false negative judgements of the similarity detection results. Then the at least one preset motion feature may be updated based on the judgment result.

In the embodiment of the present application, the at least one preset motion feature includes a preset motion feature corresponding to at least one normal acquiring action and/or a preset motion feature corresponding to at least one abnormal acquiring action.

In some other embodiments of the present application, the motion feature of the mobile acquiring device may also be input into a pre-trained abnormal acquiring motion detection model, and the payment information processing result may be determined according to an output result of the motion feature detection model.

The abnormal acquiring action detection model may perform a model training based on historical motion data of at least one mobile acquiring device, thereby obtaining an abnormal acquiring action detection model for detecting abnormal acquiring actions.

In the embodiment of the present application, the specific method for determining the payment information processing result according to the similarity may include: determining a preset motion feature matching the motion feature of the mobile acquiring device based on the similarity and a preset similarity threshold, so as to determine an acquiring action matching the mobile acquiring device and thus determine whether the mobile acquiring device is having a normal acquiring action or an abnormal acquiring action.

Taking the case where at least one preset motion feature includes a preset motion feature corresponding to at least one normal acquiring action as an example, the similarity between the motion feature of the mobile acquiring device and at least one preset motion feature can be detected to determine whether there is a matching preset motion feature. If there is a matching preset motion feature, it may be determined that the mobile acquiring device is having a normal acquiring action; if not, it may be determined that the mobile acquiring device is having an abnormal acquiring action. In this example, by determining the similarity relative to the preset motion feature corresponding to at least one normal acquiring action, the similarity detection result can be quickly detected, thereby reducing the data processing amount and improving the data processing efficiency.

After it is determined that the mobile acquiring device is having a normal acquiring action or an abnormal acquiring action, if the mobile acquiring device is having a normal acquiring action, it may be determined that the payment information processing result is that the transaction is risk-free; if the mobile acquiring device is having an abnormal acquiring action, it may be determined that the payment information processing result is that the transaction is risky.

In the embodiment of the present application, the specific method for determining the payment information processing result according to the similarity may additionally or alternatively include: obtaining transaction-related information and determining a transaction detection result corresponding to the transaction-related information; analyzing the similarity and the transaction detection result, and determining a transaction risk level according to a corresponding relationship between the analysis result and the transaction risk level, as the payment information processing result.

The transaction-related information may include a transaction environment detection result, merchant information, and transaction location information. Specifically, the transaction environment detection result may include a detection result about the mobile acquiring device being wrapped by an outer object and/or a detection result about a transaction card being held by a hand.

According to the transaction-related information, the transaction detection result corresponding to each transaction-related information may be determined respectively, and then the transaction detection result corresponding to each transaction-related information and the similarity may be weighted and summed to obtain the analysis result. According to a numerical range in which the analysis result is located, the transaction risk level may be determined and taken as the payment information processing result.

In the embodiment of the present application, the corresponding relationship between the analysis result and the transaction risk level may be determined depending on a merchant type corresponding to the mobile acquiring device and/or a business scenario corresponding to the acquiring request. That is, numerical ranges corresponding to different transaction risk levels can be determined according to the merchant type corresponding to the mobile acquiring device and/or the business scenario corresponding to the acquiring request. In this case, when the analysis result falls within any numerical range, the payment information processing result can be determined to be the transaction risk level corresponding to the numerical range.

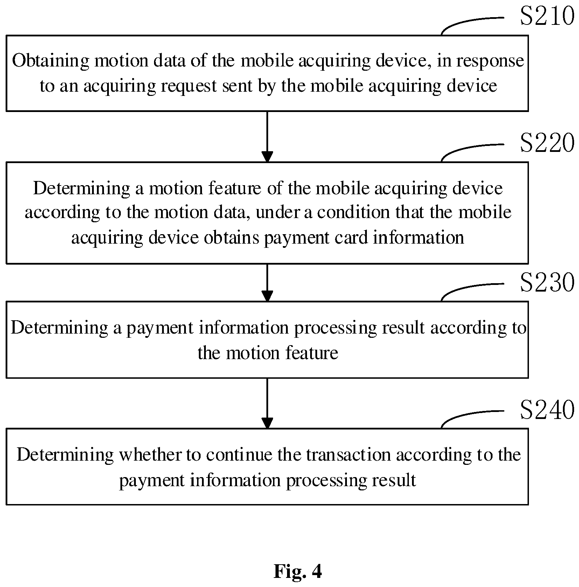

Fig. 4 shows a schematic flowchart of a payment information processing method provided by another embodiment of the present application. As shown in Fig. 4, the payment information processing method further includes:
S240: determining whether to continue the transaction according to the payment information processing result.

In the embodiment of the present application, depending on the two kinds of payment information processing results as described above, there may be two options for the method of determining whether to continue the transaction.

### The first option:

In this option, the payment information processing result is that the transaction is risk-free or the transaction is risky. In this case, whether to continue or terminate the transaction can be directly determined according to the payment information processing result. That is, when it is determined that the payment information processing result is that the transaction is risk-free, the transaction is continued; when it is determined that the payment information processing result is that the transaction is risky, the transaction is terminated.

### The second option:

In this option, the payment information processing result is the transaction risk level. In this case, it is possible to determine whether to continue the transaction according to different transaction risk levels. When the transaction risk level is low, the transaction is continued; when the transaction risk level is high, the cardholder may be notified to make a second confirmation and/or the acquirer may be notified to further verify the merchant's identity.

In an example in which three transaction risk levels are defined:
when the transaction risk level is level 1, the risk is a minimal risk at this time, the transaction may be completed directly, and the cardholder and the merchant may be notified of the transaction information.
when the transaction risk level is level 2, the risk is a medium risk at this time, there is a possibility of fraudulent use, and further confirmation by the cardholder is required to further complete the transaction.
when the transaction risk level is level 3, the risk is a high risk at this time, the possibility of fraudulent use is very high, and the transaction cannot be completed until the cardholder makes further confirmation and the acquirer further verifies the identity of the merchant.

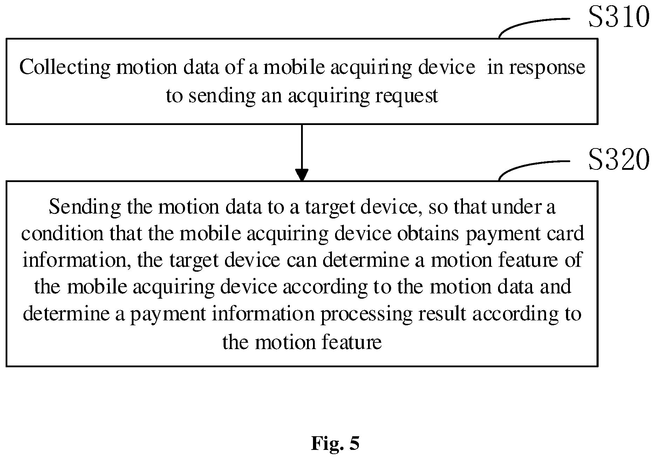

Fig. 5 shows a schematic flowchart of a payment information processing method provided by a further embodiment of the present application. As shown in Fig. 5, the payment information processing method may be applied to the mobile acquiring device 101 shown in Fig. 1 and may include:
S310: collecting motion data of the mobile acquiring device in response to sending an acquiring request;
S320: sending the motion data to a target device, so that under a condition that the mobile acquiring device obtains payment card information, the target device can determine a motion feature of the mobile acquiring device according to the motion data and determine a payment information processing result according to the motion feature.

In the embodiment of the present application, the mobile acquiring device can collect the motion data of the mobile acquiring device in response to sending the acquiring request and send the motion data to the target device, so that the target device can determine the motion feature of the mobile acquiring device according to the motion data under a condition that the mobile acquiring device obtains the payment card information of the payment card, and determine the payment information processing result related to transaction risk based on the motion feature so as to provide a risk judgment basis for a transaction. Thus when the merchant uses the mobile acquiring device to initiate a transaction and obtain a transaction object, security of a payment card account of a cardholder corresponding to the transaction object can be improved, and a probability of false or fraudulent use of the payment card can be reduced.

In the embodiment of the present application, the target device is the device server 102 shown in Fig. 1.

The payment information processing method of the embodiment of the present application may be applied to various transaction cards with a contactless chip or a contact chip, such as a bank card, a bus card or a shopping card, etc.; and may also be applied to a third party payment software in a mobile terminal.

In some embodiments of the present application, the payment card information is information stored in the contact chip or the contactless chip of the payment card. In some other embodiments of the present application, the payment card information may also be information stored in the mobile terminal.

The payment card information may include at least identity information of the cardholder of the payment card and account information of the payment card. The payment card information may be used by a card issuing bank to verify the identity of the cardholder and the transaction account for the transaction.

In the present application, when the merchant uses the mobile acquiring device to have a transaction with the cardholder, the merchant firstly needs to use the mobile acquiring device to send the acquiring request; after sending the acquiring request, the mobile acquiring device sends the acquiring request and/or an acquiring request signal to the device server; and the device server responds to the acquiring request sent by the mobile acquiring device by responding to the acquiring request and/or the acquiring request signal, and obtains the motion data of the mobile acquiring device.

In the present application, the mobile acquiring device sends the motion data to the device server in real time after sending the acquiring request, or the mobile acquiring device may send all the collected motion data to the device server when the payment card information is obtained.

In the present application, the payment information processing method further includes: in response to obtaining the payment card information, the mobile acquiring device sends the payment card information and/or a payment card reading signal to the target device, so that in response to the payment card information and/or the payment card reading signal, the target device can determine the motion feature of the mobile acquiring device according to the motion data under a condition that the mobile acquiring device obtains the payment card information, and determine the payment information processing result based on the motion feature.

When the mobile acquiring device sends the payment card reading signal to the target device in response to obtaining the payment card information, if the device server determines to continue the transaction based on the payment information processing result, the device server needs to firstly obtain the payment card information from the mobile acquiring device and then proceed to the subsequent transaction process. When the mobile acquiring device sends the payment card information or sends the payment card information and the payment card reading signal to the target device in response to obtaining the payment card information, if the device server determines to continue the transaction based on the payment information processing result, the device server directly uses the payment card information to proceed to the subsequent transaction process.

In some embodiments of the present application, the payment information processing method may further include: the mobile acquiring device stops collecting the motion data in response to obtaining the payment card information. That is, the payment card being actually swiped can be taken as an ending sign, so as to prevent the merchant who fraudulently uses the payment card from performing an "action demonstration" before the payment card is actually swiped to circumvent transaction detection based on motion data detection.

In some embodiments of the present application, the payment information processing method may further include: under a condition that the payment card information has not been obtained and a predetermined time period is reached after the sending of the acquiring request, resending an acquiring request.

Therefore, in the embodiment of the present application, the waiting time for the mobile acquiring device to obtain the payment card information in response to sending the acquiring request may be limited, so that under a condition that the waiting time for the mobile acquiring device to obtain the payment card information reaches the predetermined time period and the mobile acquiring device has not yet obtained the payment card information, the mobile acquiring device may terminate the transaction and need to resend the acquiring request to continue the transaction.

In the embodiment of the present application, the predetermined time period may be set to be any time period in a range of 5s to 8s, such as 5s, 6s, or 8s, and may also be set to be other time periods as required.

Since the predetermined time period corresponding to the waiting time for the mobile acquiring device to obtain the payment card information is set in the embodiment of the present application, a possibility that a merchant fraudulently using the payment card continuously uses the mobile acquiring device to fraudulently use the payment card can be reduced in the embodiment of the present application.

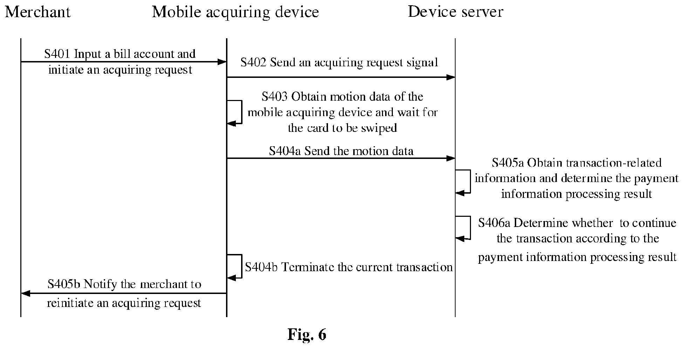

Fig. 6 shows a schematic diagram of a transaction process provided by an embodiment of the present application. As shown in Fig. 6, when a merchant uses a mobile acquiring device to conduct a transaction to a payment card, the transaction process between the mobile acquiring device and the device server may include:
S401: after the merchant uses the mobile acquiring device to perform identity authentication and login, the merchant inputs a bill amount to the mobile acquiring device and initiates an acquiring request;
S402: the mobile acquiring device sends an acquiring request signal to the device server;
S403: the mobile acquiring device obtains motion data of the mobile acquiring device and waits for the card to be swiped within a preset time period;
S404a: if the mobile acquiring device obtains payment card information of the payment card within the preset time period, the mobile acquiring device sends the motion data to the device server;
S405a: the device server obtains transaction-related information, and determines a risk level according to the motion data and the transaction-related information, as a payment information processing result;
S406a: the device server determines whether to continue the transaction according to the payment information processing result;
S404b: if the mobile acquiring device fails to obtain the payment card information of the payment card within the preset time period, the mobile acquiring device terminates the current transaction;
S405b: the mobile acquiring device notifies the merchant to reinitiate an acquiring request.

In summary, according to the embodiment of the present application, the transaction risk can be evaluated based on the motion data so as to complete analysis and detection of the transaction risk without affecting experience of the merchant and the cardholder, thereby greatly increasing the technical threshold of fraudulent use and effectively reducing occurrence of fraudulent use. In addition, according to the embodiment of the present application, a time correlation among an acquiring initiation event, a motion data monitor event, and a payment card information reading event can be established, which can avoid bypassing the risk monitoring function and prevent the merchant from seizing an opportunity to fraudulently use the payment card while the mobile acquiring device continuously obtains the payment card information.

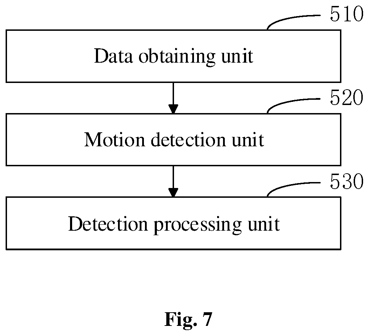

Fig. 7 is a schematic structural diagram of a payment information processing apparatus provided by an embodiment of the present application. As shown in Fig. 7, the payment information processing apparatus may be applied to the device server 102 shown in Fig. 1 and may include:
a data obtaining unit 510 configured to obtain motion data of a mobile acquiring device, in response to an acquiring request sent by the mobile acquiring device;
a motion detection unit 520 configured to determine a motion feature of the mobile acquiring device according to the motion data, under a condition that the mobile acquiring device obtains payment card information;
a detection processing unit 530 configured to determine a payment information processing result according to the motion feature.

In the embodiment of the present application, the payment information processing apparatus is able to obtain the motion data of the mobile acquiring device after the mobile acquiring device sends the acquiring request, determine the motion feature of the mobile acquiring device by use of the motion data under a condition that the mobile acquiring device obtains the payment card information of the payment card, and determine the payment information processing result related to the transaction risk based on the motion feature so as to provide a risk judgment basis for the transaction. Thus when the merchant uses the mobile acquiring device to initiate a transaction and obtain a transaction object, security of a payment card account of a cardholder corresponding to the transaction object can be improved, and a probability of false or fraudulent use of the payment card can be reduced.

The payment information processing apparatus of the embodiment of the present application may be applied to various transaction cards with a contactless chip or a contact chip, such as a bank card, a bus card or a shopping card, etc.; and may also be applied to a third party payment software in a mobile terminal.

In the embodiment of the present application, when the merchant uses the mobile acquiring device to have a transaction with the cardholder, the merchant may firstly need to use the mobile acquiring device to send the acquiring request; after sending the acquiring request, the mobile acquiring device may send the acquiring request and/or an acquiring request signal to the device server; and the device server may respond to the acquiring request sent by the mobile acquiring device by responding to the acquiring request and/or the acquiring request signal, and obtain the motion data of the mobile acquiring device.

In the embodiment of the present application, the obtained motion data of the mobile acquiring device may be data collected by the mobile acquiring device between a first moment and a second moment, where the first moment is a moment when the mobile acquiring device sends the acquiring request and the second moment is a moment when the mobile acquiring device obtains the payment card information. In these embodiments, it is not only possible to prevent circumvention of the transaction detection based on the motion data detection, but also possible to reduce an amount of data processing, improve efficiency of the data processing and reduce resource occupation of the device server since the data is collected only from the moment when the acquiring request is sent to the moment when the payment card information is obtained, i.e. during a period when the payment card is actually swiped.

In other embodiments of the present application, the obtained motion data of the mobile acquiring device may also be data collected by the mobile acquiring device between the first moment and a third moment, where the third moment is a moment when the second moment is delayed to reach a delay period.

In the embodiment of the present application, a specific moment for the data obtaining unit 510 to obtain the motion data of the mobile acquiring device in response to the acquiring request sent by the mobile acquiring device may be a moment of receiving the acquiring request sent by the mobile acquiring device, that is, after receiving the acquiring request sent by the mobile acquiring device, the motion data of the mobile acquiring device may be continuously obtained; the specific moment of obtaining the motion data of the mobile acquiring device may be a moment when the mobile acquiring device obtains the payment card information, that is, after the mobile acquiring device obtains the payment card information, all the motion data of the mobile acquiring device before obtaining the payment card information may be received.

In some embodiments of the present application, the payment card information may be information stored in the contact chip or the contactless chip of the payment card. In some other embodiments of the present application, the payment card information may also be information stored in the mobile terminal.

The payment card information may include at least identity information of the cardholder of the payment card and account information of the payment card. The payment card information may be used by a card issuing bank to verify the identity of the cardholder and the transaction account for the transaction.

In the embodiment of the present application, the waiting time for the mobile acquiring device to obtain payment card information in response to the acquiring request may also be limited. Specifically, the payment information processing apparatus may further include a first timing unit configured to reobtain the motion data of the mobile acquiring device in response to an acquiring request resent by the mobile acquiring device, under a condition that the response to the acquiring request reaches a predetermined time period and the mobile acquiring device has not obtained the payment card information. That is, under a condition that the waiting time for the mobile acquiring device to obtain the payment card information reaches the predetermined time period and the mobile acquiring device has not yet obtained the payment card information, the transaction may be terminated, and thus the mobile acquiring device may need to resend the acquiring request. In this case, the device server may reobtain the motion data of the mobile acquiring device in response to the acquiring request resent by the mobile acquiring device.

In the embodiment of the present application, the predetermined time period may be set to be any time period in a range of 5s to 8s, such as 5s, 6s, or 8s, and may also be set to be other time periods as required.

Since the predetermined time period corresponding to the waiting time for the mobile acquiring device to obtain the payment card information is set in the embodiment of the application, a possibility that a merchant fraudulently using the payment card continuously uses the mobile acquiring device to fraudulently use the payment card can be reduced in the embodiment of the application.

In the embodiment of the present application, the motion data may include action sensor signals at multiple moments, so that the action sensor signals at the multiple moments can be used to determine the motion feature of the mobile acquiring device. In this case, the motion detection unit 520 may be further configured to: perform Kalman filtering on the action sensor signals at the multiple moments to obtain Kalman filtered data at the multiple moments; and determine the motion feature of the mobile acquiring device based on the Kalman filtered data at the multiple moments. The action sensor signals at the multiple moments may be Kalman filtered separately by use of the Kalman filter.

Specifically, the motion detection unit 520 may be further configured to: calculate motion feature vectors at the multiple moments according to the Kalman filtered data at the multiple moments; and arrange the motion feature vectors at the multiple moments in chronological order to form the motion feature of the mobile acquiring device.

The action sensor signal may include at least one of an accelerometer signal, a gyroscope signal, and a magnetometer signal. The Kalman filtered data may include at least one of a motion angular velocity coordinate, a motion acceleration coordinate, a motion position coordinate, and a motion attitude angle coordinate; the motion feature vector may include at least one of a motion angular velocity component, a motion acceleration component, a motion position component, and a motion attitude angle component.

In the embodiment of the present application, when the action sensor signal includes the accelerometer signal and the gyroscope signal, the Kalman filtering can make the accelerometer signal and the gyroscope signal complementary, which can avoid a problem of having a large motion noise and error when only the accelerometer is used for measurement or having an error drifting with time when only the gyroscope is used for measurement. Therefore, according to the embodiment of the present application, the accelerometer signal and the gyroscope signal can be effectively combined, thereby improving accuracy of motion monitoring of the mobile acquiring device.

In the embodiment of the present application, the detection processing unit 530 may be further configured to: calculate a similarity between the motion feature and at least one preset motion feature; and determine the payment information processing result according to the similarity.

Specifically, the detection processing unit 530 may be further configured to perform a feature analysis based on historical motion data of at least one mobile acquiring device to obtain at least one preset motion feature.

The at least one preset motion feature includes a preset motion feature corresponding to at least one normal acquiring action and/or a preset motion feature corresponding to at least one abnormal acquiring action.

In some embodiments of the present application, the specific method for the detection processing unit 530 to determine the payment information processing result according to the similarity may include: determining a preset motion feature that matches the motion feature of the mobile acquiring device based on the similarity and a preset similarity threshold, so as to determine an acquiring action matching the mobile acquiring device and thus determine whether the mobile acquiring device is having a normal acquiring action or an abnormal acquiring action.

In the embodiment of the present application, the specific method for the detection processing unit 530 to determine the payment information processing result according to the similarity may further include: obtaining transaction-related information and determining the transaction detection result corresponding to the transaction-related information; analyzing the similarity and the transaction detection result, and determine a transaction risk level according to a corresponding relationship between the analysis result and the transaction risk level, as the payment information processing result.

The corresponding relationship between the analysis result and the transaction risk level may be determined depending on a merchant type corresponding to the mobile acquiring device and/or a business scenario corresponding to the acquiring request. That is, numerical ranges corresponding to different transaction risk levels can be determined according to the merchant type corresponding to the mobile acquiring device and/or the business scenario corresponding to the acquiring request. In this case, when the analysis result falls within any numerical range, the payment information processing result can be determined to be the transaction risk level corresponding to the numerical range.

In the embodiment of the present application, the payment information processing apparatus may further include a transaction determination unit configured to determine whether to continue the transaction according to the payment information processing result.

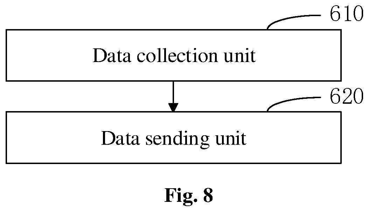

Fig. 8 is a schematic structural diagram of a payment information processing apparatus provided by an embodiment of the present application. As shown in Fig. 8, the payment information processing apparatus may be applied to the mobile acquiring device 101 shown in Fig. 1 and may include:
a data collection unit 610 configured to collect motion data of the mobile acquiring device in response to sending an acquiring request;
a data sending unit 620 configured to send the motion data to a target device, so that under a condition that the mobile acquiring device obtains payment card information, the target device can determine a motion feature of the mobile acquiring device according to the motion data and determine a payment information processing result according to the motion feature.

In the embodiment of the present application, the payment information processing apparatus can collect the motion data of the mobile acquiring device in response to sending the acquiring request and send the motion data to the target device, so that the target device can determine the motion feature of the mobile acquiring device according to the motion data under a condition that the mobile acquiring device obtains payment card information of the payment card, and determine the payment information processing result related to transaction risk based on the motion feature so as to provide a risk judgment basis for a transaction. Thus when the merchant uses the mobile acquiring device to initiate a transaction and obtain a transaction object, security of a payment card account of a cardholder corresponding to the transaction object can be improved, and a probability of false or fraudulent use of the payment card can be reduced.

In the embodiment of the application, the target device may be the device server 102 shown in Fig. 1.

The payment information processing apparatus of the embodiment of this application may be applied to various transaction cards with a contactless chip or a contact chip, such as a bank card, a bus card or a shopping card, etc.; and may also be applied to a third party payment software in a mobile terminal.

In some embodiments of the present application, the payment card information is information stored in the contact chip or the contactless chip of the payment card. In some other embodiments of the present application, the payment card information may also be information stored in the mobile terminal.

The payment card information may include at least identity information of the cardholder of the payment card and account information of the payment card. The payment card information may be used by a card issuing bank to verify the identity of the cardholder and the transaction account for the transaction.

In the embodiment of the application, the payment information processing apparatus may further include an information sending unit configured to send the acquiring request and/or an acquiring request signal to the device server after the acquiring request is sent, so that the device server can respond to the acquiring request sent by the mobile acquiring device by responding to the acquiring request and/or the acquiring request signal, and obtain the motion data of the mobile acquiring device.

In the embodiment of the application, the mobile acquiring device may send the motion data to the device server in real time after sending the acquiring request, or the mobile acquiring device may send all the collected motion data to the device server when the payment card information is obtained.

In some embodiments of the present application, the information sending unit may be further configured to: send the payment card information and/or a payment card reading signal to the target device in response to obtaining the payment card information, so that in response to the payment card information and/or the payment card reading signal, the target device can determine the motion feature according to the motion data under a condition that the mobile acquiring device obtains the payment card information, and determine the payment information processing result based on the motion feature.

When the mobile acquiring device sends the payment card reading signal to the target device in response to obtaining the payment card information, if the device server determines to continue the transaction based on the payment information processing result, the device server needs to firstly obtain the payment card information from the mobile acquiring device and then proceed to the subsequent transaction process. When the mobile acquiring device sends the payment card information or sends the payment card information and the payment card reading signal to the target device in response to obtaining the payment card information, if the device server determines to continue the transaction based on the payment information processing result, the device server may directly use the payment card information to proceed to the subsequent transaction process.

In the embodiment of the present application, the data collection unit 610 may be further configured to: stop collecting the motion data in response to obtaining the payment card information. That is, the payment card being actually swiped can be taken as an ending sign, so as to prevent the merchant who fraudulently uses the payment card from performing an "action demonstration" before the payment card is actually swiped to circumvent transaction detection based on motion data detection.

In the embodiment of the present application, the payment information processing apparatus may further include a second timing unit configured to resend, under a condition that the payment card information has not been obtained and a predetermined time period is reached after the sending of the acquiring request, an acquiring request.

Therefore, in the embodiment of the present application, the waiting time for the mobile acquiring device to obtain the payment card information in response to sending the acquiring request may be limited, so that under a condition that the waiting time for the mobile acquiring device to obtain the payment card information reaches the predetermined time period and the mobile acquiring device has not yet obtained the payment card information, the mobile acquiring device may terminate the transaction and need to resend the acquiring request to continue the transaction.

In the embodiment of the present application, the predetermined time period may be set to be any time period in a range of 5s to 8s, such as 5s, 6s, or 8s, and may also be set to be other time periods as required.

Since the predetermined time period corresponding to the waiting time for the mobile acquiring device to obtain the payment card information is set in the embodiment of the application, a possibility that a merchant fraudulently using the payment card continuously uses the mobile acquiring device to fraudulently use the payment card can be reduced in the embodiment of the application.

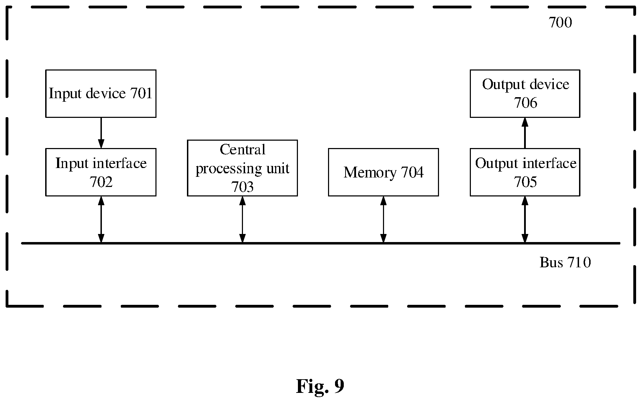

The payment information processing method and apparatus according to the embodiments of the present application may be implemented by a payment information processing device. Fig. 9 shows a schematic diagram of a hardware structure of a payment information processing device 700 according to an embodiment of the present application.

As shown in Fig. 9, the payment information processing device 700 includes an input device 701, an input interface 702, a central processing unit 703, a memory 704, an output interface 705, and an output device 706. The input interface 702, the central processing unit 703, the memory 704, and the output interface 705 are connected to each other via a bus 710. The input device 701 and the output device 706 are connected to the bus 710 via the input interface 702 and the output interface 705 respectively, and then are connected to other components of the payment information processing device 700.

Specifically, the input device 701 receives input information from outside, and transmits the input information to the central processing unit 703 through the input interface 702; the central processing unit 703 processes the input information based on computer executable instructions stored in the memory 704 to generate output information, temporarily or permanently stores the output information in the memory 704, and then transmits the output information to the output device 706 through the output interface 705; the output device 706 outputs the output information to the outside of the payment information processing device 700 for use by the user.

In other words, the payment information processing device shown in Fig. 9 may also be implemented as including: a memory storing computer executable instructions; and a processor that can implement the payment information processing method and apparatus as described in the embodiments of the present application when executing the computer executable instructions.

The embodiments of the present application also provide a computer-readable storage medium having computer program instructions stored thereon; the computer program instructions, when executed by a processor, can implement the payment information processing method provided in the embodiments of the present application.

The functional blocks shown in the above structural block diagram can be implemented as hardware, software, firmware, or a combination thereof. When implemented in hardware, the functional blocks may be, for example, an electronic circuit, an application specific integrated circuit (ASIC), appropriate firmware, a plug-in, a function card, and so on. When implemented in software, the elements of the present application are programs or code segments used to perform required tasks. The programs or code segments may be stored in a machine-readable medium, or transmitted on a transmission medium or a communication link via a data signal carried in a carrier wave. The "machine-readable medium" may include any medium that can store or transmit information. Examples of the machine-readable medium include an electronic circuit, a semiconductor memory device, a ROM, a flash memory, an erasable ROM (EROM), a floppy disks, a CD-ROM, an optical disk, a hard disk, a fiber optic medium, a radio frequency (RF) link, and so on. The code segments may be downloaded via a computer network such as the Internet, an intranet, etc.

Although the present application has been described with reference to preferred embodiments, various modifications can be made without departing from the scope of the present application and the components therein can be replaced with equivalents. In particular, as long as there is no structural conflict, various technical features mentioned in various embodiments can be combined in any manner. The present application is not limited to the specific embodiments disclosed herein, but includes all technical solutions falling within the scope of the claims.

## Claims

1. A payment information processing method, **characterized by** comprising:
sending, by a mobile acquiring device (101), an acquiring request associated with a transaction to a device server (102);
obtaining (S210) , by the device server (102), motion data of the mobile acquiring device(101) in real time, in response to receiving the acquiring request sent by the mobile acquiring device (101);
sending, by the mobile acquiring device (101), payment card information to the device server (102), in response to obtaining the payment card information;
determining (S220), by the device server (102), a motion feature of the mobile acquiring device (101) according to the real time
motion data, under a condition that the mobile acquiring device (101) obtains the payment card information;
determining (S230), by the device server (102), a payment information processing result according to the motion feature; and
using, by the device server (102), the payment card information to proceed to a subsequent process of the transaction under a condition that the device server (102) determines to continue the transaction based on the payment information processing result,
wherein the real time motion data is data collected by the mobile acquiring device (101) and sent to the device server (102) in real time between a first moment and a second moment, the first moment is a moment when the mobile acquiring device (101) sends the acquiring request, and the second moment is a moment when the mobile acquiring device (101) obtains the payment card information.

2. The method of claim 1, wherein the determining (S230), by the device server (102), a payment information processing result according to the motion feature comprises:
calculating a similarity between the motion feature and at least one preset motion feature;
determining the payment information processing result according to the similarity.

3. The method of claim 2, further comprising:
performing, by the device server (102), a feature analysis based on historical motion data of at least one mobile acquiring device (101) to obtain the at least one preset motion feature.

4. The method of claim 2, wherein the at least one preset motion feature comprises a preset motion feature corresponding to at least one normal acquiring action and/or a preset motion feature corresponding to at least one abnormal acquiring action.

5. The method of claim 2, wherein the determining the payment information processing result according to the similarity comprises:
obtaining transaction-related information and determining a transaction detection result corresponding to the transaction-related information;
analyzing the similarity and the transaction detection result, and determining a transaction risk level according to a corresponding relationship between an analysis result and the transaction risk level, as the payment information processing result.

6. The method of claim 5, wherein the corresponding relationship between the analysis result and the transaction risk level is determined depending on a merchant type corresponding to the mobile acquiring device (101) and/or a business scenario corresponding to the acquiring request.

7. The method of claim 1, further comprising:
reobtaining, by the device server (102), under a condition that a response to the acquiring request reaches a predetermined time period and the mobile acquiring device (101) has not obtained the payment card information, the real time motion data of the mobile acquiring device (101) in response to an acquiring request resent by the mobile acquiring device (101).

8. The method of claim 1, wherein the real time motion data comprises action sensor signals at multiple moments, and the determining (S220), by the device server (102), a motion feature of the mobile acquiring device (101) according to the real time motion data comprises:
performing Kalman filtering on the action sensor signals at the multiple moments to obtain Kalman filtered data at the multiple moments;
determining the motion feature of the mobile acquiring device (101) according to the Kalman filtered data at the multiple moments.

9. The method of claim 8, wherein the determining the motion feature of the mobile acquiring device (101) according to the Kalman filtered data at the multiple moments comprises:
calculating motion feature vectors at the multiple moments according to the Kalman filtered data at the multiple moments;
arranging the motion feature vectors at the multiple moments in chronological order to form the motion feature of the mobile acquiring device (101).

10. The method of claim 9, wherein the action sensor signals comprise at least one of an accelerometer signal, a gyroscope signal, and a magnetometer signal.

11. The method of claim 9, wherein the Kalman filtered data comprises at least one of a motion angular velocity coordinate, a motion acceleration coordinate, a motion position coordinate, and a motion attitude angle coordinate; the motion feature vectors comprise at least one of a motion angular velocity component, a motion acceleration component, a motion position component, and a motion attitude angle component.

12. A payment information processing system, comprising a mobile acquiring device and a device server for performing the payment information processing method according to any one of claims 1 to 11.

## Patentansprüche

1. Verfahren zur Verarbeitung von Zahlungsinformationen, **dadurch gekennzeichnet, dass** das Verfahren Folgendes umfasst:
Senden, durch ein mobiles Erfassungsgerät (101), einer Erfassungsanfrage, die einer Transaktion zugeordnet ist, an einen Geräteserver (102);
Erhalten (S210), durch den Geräteserver (102), von Bewegungsdaten des mobilen Erfassungsgeräts (101) in Echtzeit als Reaktion auf den Empfang der vom mobilen Erfassungsgerät (101) gesendeten Erfassungsanfrage;
Senden, durch das mobile Erfassungsgerät (101), von Zahlungskarteninformationen an den Geräteserver (102) als Reaktion auf den Erhalt der Zahlungskarteninformationen;
Bestimmen (S220), durch den Geräteserver (102), eines Bewegungsmerkmals des mobilen Erfassungsgeräts (101) gemäß den Echtzeit-Bewegungsdaten unter der Bedingung, dass das mobile Erfassungsgerät (101) die Zahlungskarteninformationen erhält;
Bestimmen (S230), durch den Geräteserver (102), eines Verarbeitungsergebnisses der Zahlungsinformationen gemäß dem Bewegungsmerkmal; und
Verwenden, durch den Geräteserver (102), der Zahlungskarteninformationen, um mit einem nachfolgenden Prozess der Transaktion fortzufahren, unter der Bedingung, dass der Geräteserver (102) auf der Grundlage des Verarbeitungsergebnisses der Zahlungsinformationen entscheidet, die Transaktion fortzusetzen,
wobei es sich bei den Echtzeit-Bewegungsdaten um Daten handelt, die vom mobilen Erfassungsgerät (101) gesammelt und in Echtzeit zwischen einem ersten Moment und einem zweiten Moment an den Geräteserver (102) gesendet werden, wobei der erste Moment ein Moment ist, in dem das mobile Erfassungsgerät (101) die Erfassungsanfrage sendet, und der zweite Moment ein Moment ist, in dem das mobile Erfassungsgerät (101) die Zahlungskarteninformationen erhält.

2. Verfahren nach Anspruch 1, wobei das Bestimmen (S230), durch den Geräteserver (102), eines Verarbeitungsergebnisses der Zahlungsinformationen gemäß dem Bewegungsmerkmal Folgendes umfasst:
Berechnen einer Ähnlichkeit zwischen dem Bewegungsmerkmal und mindestens einem voreingestellten Bewegungsmerkmal;
Bestimmen des Verarbeitungsergebnisses der Zahlungsinformationen entsprechend der Ähnlichkeit.

3. Verfahren nach Anspruch 2, weiterhin umfassend:
Durchführen, durch den Geräteserver (102), einer Merkmalsanalyse basierend auf historischen Bewegungsdaten von mindestens einem mobilen Erfassungsgerät (101), um das mindestens eine voreingestellte Bewegungsmerkmal zu erhalten.

4. Verfahren nach Anspruch 2, wobei das mindestens eine voreingestellte Bewegungsmerkmal ein voreingestelltes Bewegungsmerkmal umfasst, das mindestens einer normalen Erfassungsaktion entspricht, und/oder ein voreingestelltes Bewegungsmerkmal, das mindestens einer abnormalen Erfassungsaktion entspricht.

5. Verfahren nach Anspruch 2, wobei das Bestimmen des Verarbeitungsergebnisses der Zahlungsinformationen entsprechend der Ähnlichkeit Folgendes umfasst:
Erhalten transaktionsbezogener Informationen und Bestimmen eines Transaktionserkennungsergebnisses, das den transaktionsbezogenen Informationen entspricht;
Analysieren der Ähnlichkeit und des Transaktionserkennungsergebnisses und Bestimmen eines Transaktionsrisikoniveaus gemäß einer entsprechenden Beziehung zwischen einem Analyseergebnis und dem Transaktionsrisikoniveau als Verarbeitungsergebnis der Zahlungsinformationen.

6. Verfahren nach Anspruch 5, wobei die entsprechende Beziehung zwischen dem Analyseergebnis und dem Transaktionsrisikoniveau abhängig von einem Händlertyp, der dem mobilen Erfassungsgerät (101) entspricht, und/oder einem Geschäftsszenario, das der Erfassungsanfrage entspricht, bestimmt wird.

7. Verfahren nach Anspruch 1, weiterhin umfassend:
erneutes Erhalten, durch den Geräteserver (102), der Echtzeit-Bewegungsdaten des mobilen Erfassungsgeräts (101) als Reaktion auf eine vom mobilen Erfassungsgerät (101) erneut gesendete Erfassungsanfrage, unter der Bedingung, dass eine Antwort auf die Erfassungsanfrage eine vorgegebene Zeitspanne erreicht und das mobile Erfassungsgerät (101) die Zahlungskarteninformationen nicht erhalten hat.

8. Verfahren nach Anspruch 1, wobei die Echtzeit-Bewegungsdaten Aktionssensorsignale zu mehreren Zeitpunkten umfassen und das Bestimmen (S220), durch den Geräteserver (102), eines Bewegungsmerkmals des mobilen Erfassungsgeräts (101) gemäß den Echtzeit-Bewegungsdaten Folgendes umfasst:
Durchführen einer Kalman-Filterung der Aktionssensorsignale zu den mehreren Zeitpunkten, um Kalman-gefilterte Daten zu den mehreren Zeitpunkten zu erhalten;
Bestimmen des Bewegungsmerkmals des mobilen Erfassungsgeräts (101) gemäß den Kalman-gefilterten Daten zu den mehreren Zeitpunkten.

9. Verfahren nach Anspruch 8, wobei das Bestimmen des Bewegungsmerkmals des mobilen Erfassungsgeräts (101) gemäß den Kalman-gefilterten Daten zu den mehreren Zeitpunkten Folgendes umfasst:
Berechnen von Bewegungsmerkmalsvektoren zu den mehreren Zeitpunkten gemäß den Kalman-gefilterten Daten zu den mehreren Zeitpunkten;
Anordnen der Bewegungsmerkmalsvektoren zu den mehreren Zeitpunkten in chronologischer Reihenfolge, um das Bewegungsmerkmal des mobilen Erfassungsgeräts (101) zu bilden.

10. Verfahren nach Anspruch 9, wobei die Aktionssensorsignale mindestens eines von einem Beschleunigungsmessersignal, einem Gyroskopsignal und einem Magnetometersignal umfassen.

11. Verfahren nach Anspruch 9, wobei die Kalman-gefilterten Daten mindestens eine Bewegungswinkelgeschwindigkeitskoordinate, eine Bewegungsbeschleunigungskoordinate, eine Bewegungspositionskoordinate und eine Bewegungslagewinkelkoordinate umfassen; die Bewegungsmerkmalsvektoren mindestens eine Bewegungswinkelgeschwindigkeitskomponente, eine Bewegungsbeschleunigungskomponente, eine Bewegungspositionskomponente und eine Bewegungslagewinkelkomponente umfassen

12. Zahlungsinformationsverarbeitungssystem, umfassend ein mobiles Erfassungsgerät und einen Geräteserver zum Durchführen des Zahlungsinformationsverarbeitungsverfahrens nach einem der Ansprüche 1 bis 11.

## Revendications

1. Procédé de traitement d'informations de paiement, **caractérisé en ce qu'**il comprend :
envoyer, par un équipement d'acquisition mobile (101), une demande d'acquisition associée à une transaction à un serveur d'équipement (102) ;
obtenir (S210), par le serveur d'équipement (102), des données de mouvement en temps réel de l'équipement d'acquisition mobile (101), en réponse à la réception de la demande d'acquisition envoyée par l'équipement d'acquisition mobile (101) ;
envoyer, par l'équipement d'acquisition mobile (101), des informations d'une carte de paiement au serveur d'équipement (102), en réponse à l'obtention des informations de la carte de paiement ;
déterminer (S220), par le serveur d'équipement (102), une caractéristique de mouvement de l'équipement d'acquisition mobile (101) en fonction des données de mouvement en temps réel, à condition que l'équipement d'acquisition mobile (101) obtienne les informations de la carte de paiement ;
déterminer (S230), par le serveur d'équipement (102), un résultat de traitement des informations de paiement en fonction de la caractéristique de mouvement ; et
utiliser, par le serveur d'équipement (102), les informations de la carte de paiement pour procéder à un processus ultérieur de la transaction à condition que le serveur d'équipement (102) décide de poursuivre la transaction en fonction du résultat du traitement des informations de paiement,
dans lequel les données de mouvement en temps réel sont des données collectées par l'équipement d'acquisition mobile (101) et envoyées au serveur d'équipement (102) en temps réel entre un premier moment et un deuxième moment, le premier moment est un moment où l'équipement d'acquisition mobile (101) envoie la demande d'acquisition, et le deuxième moment est un moment où l'équipement d'acquisition mobile (101) obtient les informations de la carte de paiement.

2. Procédé selon la revendication 1, dans lequel l'étape de déterminer (S230), par le serveur d'équipement (102), un résultat de traitement des informations de paiement en fonction de la caractéristique de mouvement comprend :
calculer une similarité entre la caractéristique de mouvement et au moins une caractéristique de mouvement prédéfinie ; et déterminer le résultat du traitement des informations de paiement en fonction de la similarité.

3. Procédé selon la revendication 2, comprenant en outre :
effectuer, par le serveur d'équipement (102), une analyse de caractéristiques basée sur les données de mouvement historiques d'au moins un équipement d'acquisition mobile (101) pour obtenir au moins une caractéristique de mouvement prédéfinie.

4. Procédé selon la revendication 2, dans lequel au moins une caractéristique de mouvement prédéfinie comprend une caractéristique de mouvement prédéfinie correspondant à au moins une action d'acquisition normale et/ou une caractéristique de mouvement prédéfinie correspondant à au moins une action d'acquisition anormale.

5. Procédé selon la revendication 2, dans lequel l'étape de déterminer le résultat du traitement des informations de paiement en fonction de la similarité comprend :
obtenir des informations relatives à la transaction et déterminer un résultat de détection de transaction correspondant aux informations relatives à la transaction ;
analyser la similarité et le résultat de la détection de transaction, et déterminer un niveau de risque de transaction en fonction d'une relation correspondante entre un résultat de l'analyse et le niveau de risque de transaction, comme résultat de traitement des informations de paiement.

6. Procédé selon la revendication 5, dans lequel la relation correspondante entre le résultat de l'analyse et le niveau de risque de transaction est déterminée en fonction d'un type de commerçant correspondant à l'équipement d'acquisition mobile (101) et/ou d'un scénario commercial correspondant à la demande d'acquisition.

7. Procédé selon la revendication 1, comprenant en outre :
ré-obtenir, par le serveur d'équipement (102), à condition qu'une réponse à la demande d'acquisition atteigne une durée prédéterminée et que l'équipement d'acquisition mobile (101) n'ait pas obtenu les informations de la carte de paiement, les données de mouvement en temps réel de l'équipement d'acquisition mobile (101) en réponse à une demande d'acquisition renvoyée par l'équipement d'acquisition mobile (101).

8. Procédé selon la revendication 1, dans lequel les données de mouvement en temps réel comprennent des signaux de capteur d'action à plusieurs moments, et l'étape de déterminer (S220), par le serveur d'équipement (102), une caractéristique de mouvement de l'équipement d'acquisition mobile (101) en fonction des données de mouvement en temps réel comprend :
effectuer un filtrage Kalman sur les signaux de capteur d'action aux plusieurs moments pour obtenir des données du filtrage Kalman aux plusieurs moments ; et
déterminer la caractéristique de mouvement de l'équipement d'acquisition mobile (101) en fonction des données du filtrage Kalman à plusieurs moments.

9. Procédé selon la revendication 8, dans lequel l'étape de déterminer la caractéristique de mouvement de l'équipement d'acquisition mobile (101) en fonction des données du filtrage Kalman à plusieurs moments comprend :
calculer des vecteurs de caractéristique de mouvement aux plusieurs moments en fonction des données du filtrage Kalman aux plusieurs moments ; et
organiser les vecteurs de caractéristique de mouvement à plusieurs moments dans l'ordre chronologique pour former la caractéristique de mouvement de l'équipement d'acquisition mobile (101).

10. Procédé selon la revendication 9, dans lequel les signaux de capteur d'action comprennent au moins un signal d'accéléromètre, un signal de gyroscope et un signal de magnétomètre.

11. Procédé selon la revendication 9, dans lequel les données du filtrage Kalman comprennent au moins une coordonnée de vitesse angulaire de mouvement, une coordonnée d'accélération de mouvement, une coordonnée de position de mouvement et une coordonnée d'angle d'attitude de mouvement ; les vecteurs de caractéristique de mouvement comprennent au moins une composante de vitesse angulaire de mouvement, une composante d'accélération de mouvement, une composante de position de mouvement et une composante d'angle d'attitude de mouvement.

12. Système de traitement d'informations de paiement, comprenant un équipement d'acquisition mobile et un serveur d'équipement pour exécuter le procédé de traitement d'informations de paiement selon l'une quelconque des revendications 1 à 11.
